# EUROPEAN PATENT SPECIFICATION

(11) **EP 2 918 112 B1**
(45) Date of publication and mention of the grant of the patent: **01.08.2018**
(21) Application number: 12784090.8
(22) Date of filing: 19.10.2012
(51) Int. Cl.: H04W 48/20, H04W 84/04

(54) **CONTENT DISTRIBUTION WITHIN A SUB-CELL IN A TELECOMMUNICATIONS SYSTEM**
INHALTSVERTEILUNG INNERHALB EINER UNTERGEORDNETEN ZELLE IN EINEM TELEKOMMUNIKATIONSSYSTEM
DISTRIBUTION DE CONTENU DANS UNE SOUS-CELLULE DANS UN SYSTÈME DE TÉLÉCOMMUNICATIONS

(43) Date of publication of application: 16.09.2015
(73) Proprietor: Telefonaktiebolaget LM Ericsson (publ), 164 83 Stockholm (SE)
(72) Inventor: LUPINI, Lorenzo, SE-171 44 Solna (SE); BELLESCHI, Marco, SE-171 66 Solna (SE)
(74) Representative: Brann AB
(86) International application number: PCT/SE2012/051120
(87) International publication number: WO 2014/088476

(56) References cited:
- WO-A1-2009/156765
- WO-A2-2010/128980
- JP-A- 2010 251 950
- US-A1- 2002 122 388
- US-A1- 2009 285 166
- US-A1- 2010 136 943

## Description

### TECHNICAL FIELD

Embodiments of the present disclosure generally relate to content distribution in a telecommunications system. More particularly, embodiments disclosed herein relate to a method performed in a user equipment for receiving the content Embodiments herein also relate to a method performed in a network node for assigning transmission resources. Furthermore, embodiments of the present disclosure are directed to a corresponding user equipment and network node.

### BACKGROUND

The distribution of content to a user equipment within a mobile infrastructure relies today on dedicated data channels that are allocated in radio frames. The transmission of radio frames is made from a base station or radio network node that serves the cell on which the user equipment is camping. This approach is suitable for delivering content with large bandwidth in wide areas which are served by multiple cells. Such content may for example be television broadcasts adapted for mobile terminals. In order for the content to reach the mobile terminals it has to transit through the mobile infrastructure of an operator.
However, not all distribution of content within the mobile infrastructure does imply the need for large bandwidth or real time transmission characteristics. There may also be situations where the mobile terminal is in a confined area, such as when a user of the mobile terminal visits a fair, a ship or is transiting trough public areas such airports, train stations etc. In such confined areas there may be a need to send dedicated information or content to the users visiting such areas. Such information may for example be information about different speakers at the fair, traffic information at the airport etc. Legacy technologies do not currently allow a dynamic handling of transmission/spectrum resources that meet the request of heterogeneous and extemporaneous deployment of small cell networks e.g. pico/femto networks in confined areas.

US 2010/136943 A1 and US 2009/285166 A1 relate to the distribution of content in an operator mobile structure to a user equipment by providing a direct link between the user equipment and a device dedicated for distributing content within a confined area or a sub-cell, the sub-cell being a subset of a coverage area of a network node to which the user equipment is attached.

Thus, there is a need to find new ways to distribute content to mobile terminals or user equipments that are in confined environments.

### SUMMARY

In view of the above, allowing a more flexible/dynamic handling of the available resources for short-range and/or temporary networks for content distribution would be advantageous.
It is therefore a general object of exemplary embodiments of the present disclosure to at least allow an operator mobile structure to distribute content to a user equipment and provide for a direct link between the user equipment and a device dedicated for distributing content within a confined area or a sub-cell.
According to an aspect, a method is provided which is performed in a user equipment for receiving content from a device. The device is configured to send sub-cell broadcasts for distributing the content within a sub-cell, said sub-cell being a subset of a coverage area of a network node to which the user equipment is attached. The method comprises receiving system information from the network node. The system information comprises information about available devices used for distributing the content within the coverage area of the network node and the type of content that is associated with each device and the transmission resources allocated to each device for distributing the content. The method further comprises selecting the type of content to receive together with at least one device associated therewith, establishing a direct link between the user equipment and the selected at least one device using the transmission resources allocated to the selected at least one device and receiving the selected type of content directly from the selected at least one device.

According to another aspect a user equipment is provided for receiving content from a device. The device is configured to send sub-cell broadcasts for distributing the content within a sub-cell, said sub-cell being a subset of the coverage area of a network node to which the user equipment is attached. The user equipment comprises a communication interface arranged for wireless communication, a processor and a memory storing computer program code which, when run in the processor causes the user equipment to: Receive system information from the network node. The system information comprises information about available devices used for distributing the content within the coverage area of the network node and the type of content that is associated to each device and the transmission resources allocated to each device for distributing the content. The user equipment is further caused to select the type of content to receive and at least one device associated therewith, establish a direct link between the user equipment and the selected at least one device using the transmission resources allocated to the selected at least one device, and receive the selected type of content directly from the selected at least one device.

According to a yet a further aspect a method is provided which is performed in a network node for assigning transmission resources to a device. The device is configured to transmit sub-cell broadcasts for distributing content to a user equipment within a sub-cell, said sub-cell being a subset of the coverage area of the network node to which the user equipment is attached. The method comprises receiving a request to register from the device, said request comprising information about the sub-cell broadcast capability of the device. The method further comprises receiving a request for allocation of transmissions resources from the device for the sub-cell broadcasts and transmitting an acknowledgement message to the device that the requested transmission resources have been allocated, transmitting system information to all user equipments within the coverage area of the network node, said system information comprising information about available devices used for distributing the content within the coverage area of the network node and the type of content that is associated to each device and the transmission resources allocated to each device for distributing the content.
According to another aspect a network node is provided for assigning transmission resources to a device. The device is configured to send sub-cell broadcasts for distributing content to a user equipment within a sub-cell, said sub-cell being a subset of the coverage area of a network node to which the user equipment is attached. The network node comprises a communication interface arranged for wireless communication, a processor and a memory storing computer program code which, when run in the processor, causes the network node to:
Receive a request to register from the device, said request comprising information about the sub-cell broadcast capability of the device, receive a request for allocation of transmissions resources from the device for the sub-cell broadcasts, transmit an acknowledgement message to the device that the requested transmission resources have been allocated, and transmit system information to all user equipments within the coverage area of the network node, said system information comprising information about available devices used for distributing the content within the coverage area of the network node and the type of content that is associated to each device and the transmission resources allocated to each device for distributing the content.

An advantage of embodiments herein is to create a direct link between a device, which may be used as a dedicated device, for distributing content within a confined area or a sub-cell and the user equipment. Another advantage is the increase of the cellular coverage and spectrum efficiency.

### BRIEF DESCRIPTION OF THE DRAWINGS

These and other aspects, features and advantages of embodiments of the present disclosure will be apparent and elucidated from the following description of various embodiments, reference being made to the accompanying drawings, in which:
Figure 1 is a schematic diagram illustrating an exemplary environment where embodiments presented herein may be applied;
Fig. 2 is a schematic diagram illustrating some modules of an exemplary embodiment of a user equipment;
Fig. 3 is a schematic diagram illustrating some modules of an exemplary embodiment of a device;
Fig. 4 is a schematic diagram illustrating some modules of an exemplary embodiment of a network node;
Fig. 5 is a flow chart illustrating a method performed by a user equipment according to an exemplary embodiment of the present disclosure;
Fig. 6 is a flow chart illustrating a method performed by a device according to an exemplary embodiment of the present disclosure;
Fig. 7 is a flow chart illustrating a method performed by a network node according to an exemplary embodiment of the present disclosure; and
Fig. 8 is a schematic signaling diagram showing the interaction between exemplary embodiments of a user equipment, a device and a network node.

### DETAILED DESCRIPTION

The invention is set out in the appended set of claims. Any references in the following description to embodiments, objects, aspects and/or examples which are not covered by the appended claims are considered as not being part of the present invention.

The technology will now be described more fully hereinafter with reference to the accompanying drawings, in which certain embodiments of the technology are shown. The technology may, however, be embodied in many different forms and should not be construed as limited to the embodiments set forth herein. Like numbers refer to like elements throughout the description.

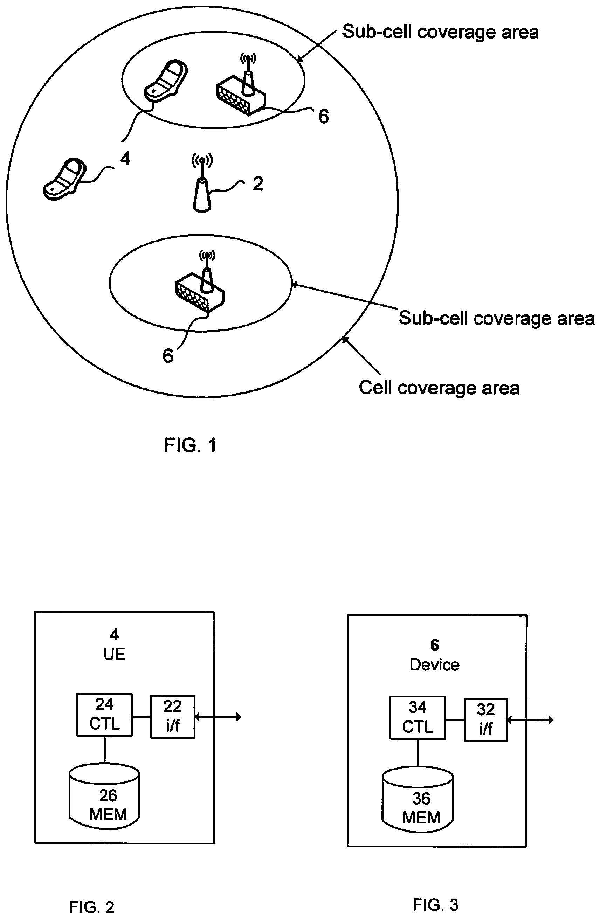

Figure 1 illustrates an exemplary environment where embodiments presented herein may be applied. Such an environment may comprise a network node 2, one or more user equipments 4 and one or more devices 6 dedicated for distributing content within a sub-cell area. In figure 1 the network node 2 covers a range depicted as a cell coverage area and the two devices 6 cover each a range depicted as sub-cell coverage areas. As is evident in figure 1 each sub-cell coverage area of each device 6 is a subset of the coverage area of the network node 2. Figure 1 shows two user equipments 4 camping on the network node 2, but there may of course be an arbitrarily number of user equipments 4 camping on the network node 2 as is readily understood by a person skilled in the art. The lower user equipment 4 in figure 1 is within the coverage area of the network node 2, but not within the coverage area of any of the devices 6. Thus, for the lower user equipment 4 it is only possible to receive content from the network node 2. However, the upper equipment 4 in figure 1 is within the sub-cell coverage area of the upper device 6 and is capable of receiving content both from the network node 2 and the device 6.

The content that the devices 6 distribute may be information pertaining to the activity in or information about the sub-cell coverage area such as events at a fair, traveler information at an airport, temperature or humidity in a room etc.

Figure 2 is a schematic diagram illustrating some modules of an exemplary embodiment of a user equipment 4 (hereinafter referred to as UE). The UE 4 may be a mobile communication terminal, a user terminal. In an exemplary embodiment, the UE 4 is a smart phone, mobile telephone or a cellular phone. However, it is equally possible that the UE 4 could be a laptop computer, tablet computer or the like. The UE 4 comprises a controller (CTL) or a processor 24 that may be constituted by any suitable Central Processing Unit, CPU, microcontroller, Digital Signal Processor, DSP, etc., capable of executing computer program code. The computer program may be stored in a memory (MEM) 26. The memory 26 may be any combination of a Read and write Memory, RAM, and a Read Only Memory, ROM. The memory 26 may also comprise persistent storage, which, for example, may be any single one or combination of magnetic memory, optical memory, or solid state memory or even remotely mounted memory. The UE 4 further comprises a communication interface (i/f) 22 arranged for wireless communication with other devices or nodes, such as the radio network node 2 or device 6.

When the above-mentioned computer program code is run in the processor 24 of the UE 4, it causes the UE 4 to receive system information from the network node 2. Such system information may comprise information about the devices 6 that are used for distributing the content within the coverage area of the network node 2 and the type of content that is associated with each device 6. Furthermore, such information may also comprise the transmission resources allocated to each device 6 by the network node 2 for distributing the content.

The UE 4 is further caused to select the type of content it wishes to receive and at least one device 6 associated therewith. The UE 4 may select content from one or more of the devices 6. The UE 4 is further caused to establish a direct link with the selected device 6 or devices 6. The one and same content may be distributed by more then one device 6, but it is also possible that each device 6 broadcasts its own unique content. When the link between the UE 4 and the device or devices has been established the UE 4 is ready to receive the selected type of content directly from the selected device 6 or devices 6.

In an exemplary embodiment the UE 4 is configured to send an access key to the selected device 6 for enabling reception of ciphered content from the selected device 6. That is if the content is ciphered the device 6 will ask the UE for access details. In context of the present description the sending of an access key is to be interpreted broadly, and may include complex negotiations in several steps between the UE 4 and the device 6 or devices 6. That is the term sending an access key may include everything from sending a simple password to sending a password or some type of other parameters together with payment details, such as credit card information in order to get access to the device 6.

In an exemplary embodiment the UE 4 is configured to use the radio access technology Long-Term Evolution (LTE) and is further configured to receive system information as extended System Information Blocks (SIB). For example the extended information, such as number of devices, device identity, broadcast scheduling, broadcast periodicity, broadcast resources like frequency and time slots etc. may be implemented as extension of a SIB already defined or may also be implemented as new SIB Type. This extended information may also be implemented as an own SIB Type.

Figure 3 is a schematic diagram illustrating some modules of an exemplary embodiment of a device 6. Such a device 6 may be a mobile communication terminal, a user terminal or mobile terminal. In an exemplary embodiment, the device 6 is a smart phone, mobile telephone or a cellular phone. However, it is equally possible that the device 6 could be a laptop computer, tablet computer or the like that is dedicated for distributing content within a sub-cell area. The device 6 may also be a custom hardware-built device configured to be an access point or also some type of generic mobile equipment that is capable of accessing the cellular infrastructure and is upgraded with software that implements the protocol described in the present disclosure. One advantage with the technology described herein is that the device 6 may be any device if it has the right software installed.

With other words the device 6 may be a dedicated mobile platform or a generic mobile equipment comprising dedicated software for distributing the content to the user equipment 4. The device 6 comprises a controller (CTL) or a processor 34 that may be constituted by any suitable Central Processing Unit, CPU, microcontroller, Digital Signal Processor, DSP, etc., capable of executing computer program code. The computer program may be stored in a memory (MEM) 36. The memory 36 may be any combination of a Read and write Memory, RAM, and a Read Only Memory, ROM. The memory 36 may also comprise persistent storage, which, for example, may be any single one or combination of magnetic memory, optical memory, or solid state memory or even remotely mounted memory. The device 6 further comprises a communication interface (i/f) 32 arranged for wireless communication with other devices or nodes, such as the radio network node 2 or the UE 4.

When the above-mentioned computer program code is run in the processor 34 of the device 6, it causes the device 6 to register with the network node 2 and inform the network node 2 of its sub-cell broadcast services, such as broadcast capability, information about what type of content the device 6 is distributing etc. The device 6 is further caused to request allocation of transmissions resources from the network node 2.

It should be mentioned that during the process of informing the network node 2 about the device's 6 broadcasting capabilities and requesting resources, the device 6 may also facilitate the cell resources planning in the network node 2 e.g. by transmitting from the device 6 to the network node 2 information about geographical position (GPS based) of the device 6 and transmit power requirements. For example, at registration, device(s) 6 may indicate to the network node 2 it/their GPS position and/or transmit power requested. Using such additional info the network node 2 could for example reassign same cell resources to different devices 6, as long as their mutual positions and transmitting powers do not cause interference.

The allocation request is based on and adapted to the type of content or data that the device 6 is capable to distribute. The device 6 will receive an acknowledgement message from the network node 2 comprising information about which transmission resources that have been allocated or granted by the network node 2, i.e. the transmission slots that have been reserved for broadcasting from the device 6 to the UEs 4. The request and acknowledgement of resources may be in form of a negotiation between the device 6 and the network node 2. If the requested transmission resources are not allocated the device 6 will make new requests until the requested resources have been allocated by the network node 2. Once the device 6 has allocated the transmission resources it is caused to establish a direct link to the UE 4 and distribute its content to the user equipment 4 within the sub-cell area of the device 6.

In an exemplary embodiment the device 6 is configured to use the radio access technology LTE and is further configured to receive system information as extended SIBs from the network node 2. For example the extended information, such as number of devices, device identity, broadcast scheduling, broadcast periodicity, broadcast resources like frequency and time slots etc. may be implemented as extension of a SIB already defined or may also be implemented as new SIB. Another alternative is to create brand new additional SIB Type, which may be transmitted with very low periodicity and only comprising the information needed for setting up the direct link between the device 6 and the UE 4.

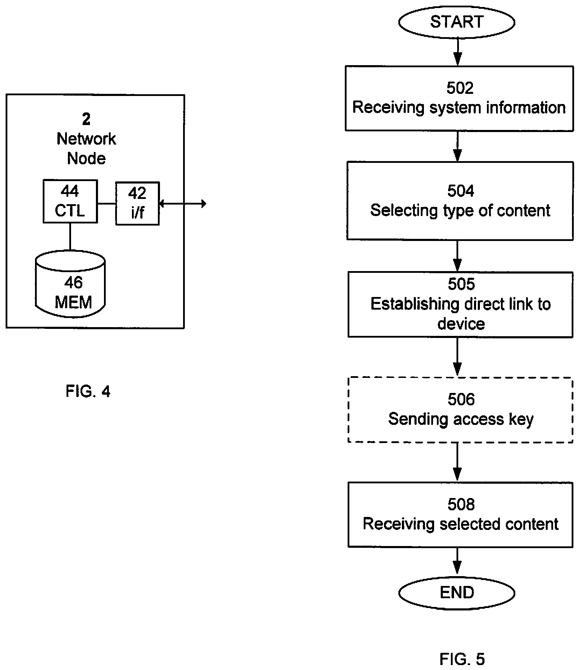

Figure 4 is a schematic diagram illustrating some modules of an exemplary embodiment of a radio network node 2. The radio network node 2 may be implemented as an Evolved Node B (eNB or eNodeB) in LTE, but may also be implemented in the radio access technology Global System for Mobile communications and/or GSM and/or Universal Mobile Telecommunications System and/or WiMax. The network node 2 comprises a controller (CTL) or a processor 44 that may be constituted by any suitable Central Processing Unit, CPU, microcontroller, Digital Signal Processor, DSP, etc., capable of executing computer program code. The computer program may be stored in a memory (MEM) 46. The memory 46 may be any combination of a Read and write Memory, RAM, and a Read Only Memory, ROM. The memory 46 may also comprise persistent storage, which, for example, may be any single one or combination of magnetic memory, optical memory, or solid state memory or even remotely mounted memory. The network node 4 further comprises a communication interface (i/f) 42 arranged for wireless communication with other devices or nodes, such as the UE 4 or device 6.

When the above-mentioned computer program code is run in the processor 44 of the network node 2, it causes the network node 2 to receive a request to register from the device 6. The request comprises information about the sub-cell broadcast services of the device 6, such as broadcast capability, information about what type of content the device 6 is distributing etc. The radio network node 2 is also caused to receive a request for allocation of transmissions resources from the device 6 for the sub-cell broadcasts. Such transmission resources may for example be frequency resources and/or time slot resources. The network node 2 will then allocate resources according to a predetermined scheme. After the network node 2 is caused to allocate resources it is caused to transmit an acknowledgement message to the device 6, informing the device 6 that the requested transmission resources have been allocated. The network node does also transmit system information to all UEs 4 within the coverage area of the network node 2. This system information comprises information about the devices 6 that are available for distributing the content within the coverage area of the network node 2 and the type of content that is associated to each device 6 and the transmission resources that have been allocated to each device 6 for distributing the content.

In an exemplary embodiment the network node 2 may, as mentioned above, be configured to use the radio access technology LTE and is further configured to send the system information as extended SIBs. In this case the network node 2 may be an eNB or eNodeB. The reserving of the transmission slots mentioned above may then be done by reserving a part of the spectrum that is assigned for every Time Transmission Interval, TTI, slot that is occurring with a certain fixed periodicity.

Turning now to figure 5, a method performed in the UE 4 for receiving content from a device 6 will be described in accordance with exemplary embodiments of the present technology. The device 6 is configured to send sub-cell broadcasts for distributing the content within a sub-cell, said sub-cell being a subset of a coverage area of a network node 2 to which the user equipment 4 is attached.

In a first step 502 the UE 4 is receiving system information from the network node 2. In order for the UE 4 to receive this system information, the UE 4 has of course to be within the coverage area of the network node 2. Such system information may comprise information about available devices 6 used for distributing the content within the coverage area of the network node 2. It may furthermore comprise the type of content that is associated with each device 6 and the transmission resources that have been allocated for each device 6 by the network node 2. After receiving the system information the UE 4 has information about which devices 6 within the broadcast area of the network node 2 that are suitable for establishing a direct communication link between the UE 4 and one or more devices 6. A user of the UE 4 may for example experience this as receiving a list, listing different content that may be of interest to a user visiting a confined space in which the device 6 or devices 6 are provided. Such information may for example be different time tables, hotel information, taxi information etc. if the confined space is for example an airport. To each item of content on the list there is associated a least one device 6 and also transmission resources.

In some exemplary embodiments the UE 4 is configured to use the radio access technology LTE, receiving the system information as extended SIBs, which have been described closer above.

In step 504 the UE 4 is selecting the type of content it wishes to receive and at least one device 6 associated therewith. The UE 4 is thereafter, in step 505, establishing a direct link between the UE 4 and the selected at least one device 6 using the transmission resources allocated to the selected at least one device 6. Thus, a direct link between the UE 4 and the device has been established without direct involving the network node 2 or the operator of the network. The network node 2 is involved insofar that the network node provides the UE 4 with the system information mentioned above.

In some exemplary embodiments of the method performed in the UE 4 the direct communication between the UE 4 and the device 6 will be ciphered. In order for enabling the reception of ciphered content the method may further comprise sending, in step 506, an access key from the UE 4 to the device 6. That is if the content is ciphered the device 6 will request access details from the UE 4. In context of the present description the sending of an access key is to be interpreted broadly, and may include complex negotiations in several steps between the UE 4 and the device 6 or devices 6. Thus, sending an access key may include for example sending a password to or some type of other parameters together with payment details, such as credit card information in order to get access to the device 6. However, step 506 is an optional step and is therefore depicted with a dashed line in figure 5.

After the direct link has been established between the UE 4 and the device 6 the UE 4 starts receiving, in step 508, the selected type of content directly from the selected at least one device using the allocated transmission resources.

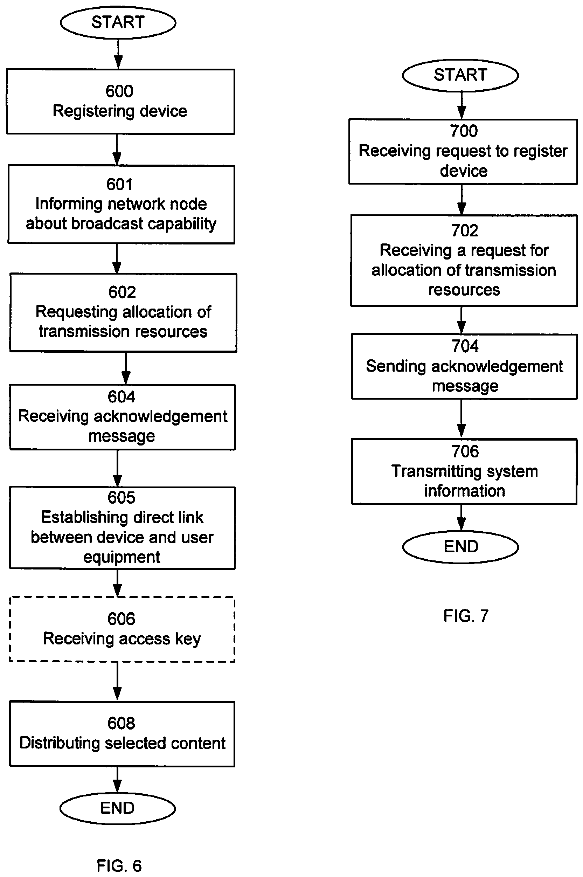

Turning now to figure 6, a method performed in a device 6 for distributing content to a UE 4 will be described. The device 6 is configured to send sub-cell broadcasts for distributing the content within a sub-cell, said sub-cell being a subset of the coverage area of a network node 2 to which the user equipment 4 is attached.

In a first step 600 the device 6 is registering with the network node 2 and informing, in step 601, the network node 2 about its sub-cell broadcast services, such as broadcast capability, information about what type of content the device 6 is distributing etc. It is parts of this information that later on is used and broadcasted by the network node 2 as extended system information.

In a further step 602 the device 6 is requesting allocation of transmissions resources from the network node 2 and if this request is granted by the network node 2 the device 6 is receiving, in step 604, an acknowledgement message from the network node 2 that the requested transmission resources have been allocated by the network node 2. Step 602 and 604 may be seen as a negotiation between the device 6 and the network node 2 and the device 6 may transmit many requests before the network node 2 grants the transmission resources. In embodiments of the present disclosure the step of requesting 602 the allocation of transmission resources may comprise requesting frequency resources and/or time slot resources according to a predetermined scheme reserved by the network node 2.

Having transmission resources the device 6 is now ready for, in step 605, establishing a direct link between the device 6 and the user equipment 4 and, in step 608, distributing content to the UE 4 within the sub-cell area of the device 6 using the allocated transmission resources.

In some exemplary embodiments the device 6 is configured to use the radio access technology LTE. In this case the device may for example request allocation of a part of a spectrum that is assigned for every TTI occurring with a certain fixed periodicity.

In another exemplary embodiment of the method performed in the device 6 the direct communication between the device 6 and the UE 4 will be ciphered. In order for enabling the distribution of ciphered content the method may further comprise receiving, in step 606, an access key from the UE 4. That is if the content is ciphered the device 6 will ask the UE 4 for access details. In context of the present description the receiving the access key is to be interpreted broadly as already mentioned above and is therefore not repeated here again.

Turning now to figure 7, a method performed in a network node 2 for assigning transmission resources to a device 6 will be described. The device 6 is configured to transmit sub-cell broadcasts for distributing content to a user equipment 4 within a sub-cell, said sub-cell being a subset of the coverage area of the network node 2 to which the user equipment 4 is attached.

In a first step 700 the network node 2 is receiving a request from the device 6 to register. Such request may comprise information about the sub-cell broadcast services of the device 6, such as broadcast capability, information about what type of content the device 6 is distributing etc. When the device 6 has been registered at the network node 2, the network node 2 is ready for, in step 702, receiving a request from the device 6 for allocation of transmissions resources to be used for the sub-cell broadcasts of the device 6. If the network node 2 grants the request it starts transmitting, in step 704, an acknowledgement message to the device 6 that the requested transmission resources have been allocated. Step 702 and 704 may be seen as a negotiation between the device 6 and the network node 2 and the network node 2 may receive many requests before it grants the transmission resources to the device 6. In embodiments of the present disclosure the step of receiving 702 the request for allocation of transmission resources may comprise receiving a request for allocation of frequency resources and/or time slot resources.

In a further step 706 the network node 2 is transmitting system information to all UEs 4 that are within the coverage area of the network node 2. Such system information may comprise information about available devices 6 used for distributing the content within the coverage area of the network node 2 and the type of content that is associated to each device 6 and the transmission resources allocated to each device 6 for distributing said content.

In an exemplary embodiment the network node 2 is an eNB configured to use the radio access technology LTE. In this case the system information is transmitted as extended SIBs. For example the extended information, such as number of devices, device identity, broadcast scheduling, broadcast periodicity, broadcast resources like frequency and time slots etc. may be implemented as extension of a SIB already defined or may also be implemented as new SIB Type.

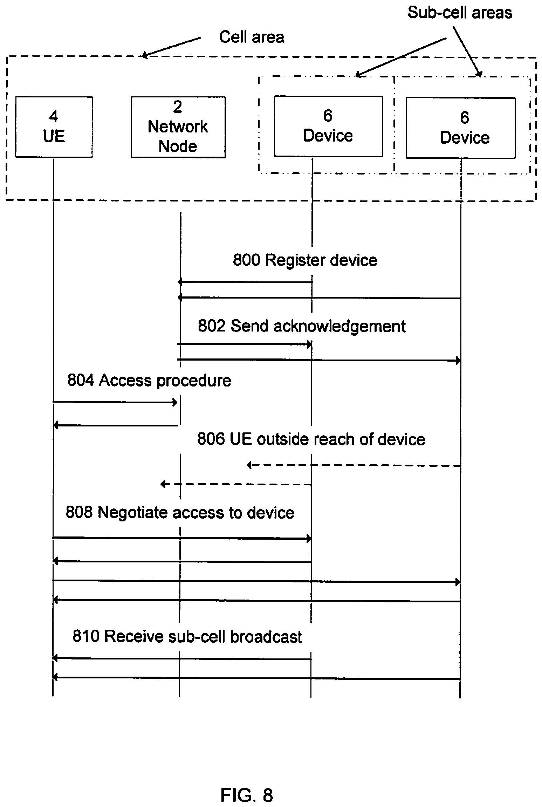

Different exemplary embodiments of the present technology have now been described. To further increase the understanding of the technology, a system overview will now be described. As shown in figure 8, the system comprises the network node 2, the UEs 4 and the devices 6. Figure 8 is a schematic signaling diagram showing the interaction between the above described exemplary embodiments of the UEs 4, the devices 6 and the (radio) network node 2.

In the example in figure 8 a cell area is depicted in which a UE 4, two devices 6 and a network node 2 are present. The two devices 6, which each cover a sub-cell area, may for example be pleased inside a building in which a fair is hosted. The sub-cell area of each device 6 may be seen as a macro-cell which is under control of the network node 2. The area of the cell of the network node covers a region that is larger than the building. With such a setup there is an interest in broadcasting information related to the fair inside the building with use of the devices 6. Such devices 6 may be seen as distributers and be owned and maintained by the organizer of the fair.

Initially the devices 6 are installed inside the building of the fair. The installation is based on radio planning within the building and is depending on the building area where the devices 6 are to be installed. After installation of devices 6 they are registered 800 at the network node 2, informing the cell of the network node 2 about the presence of the local broadcasting services. This registering procedure may include negotiation between the network node 2 and devices 6 for transmission resources to be reserved for the broadcasting to potential UEs 4 visiting the fair. The devices 6 for which the operator of the network node has granted resources are made aware of the transmission resources assigned to them when they receive an acknowledgement message 802 from the network node 2. The devices 6 are now ready to start distributing data or content to potential UEs 4 that are within the reach of the devices 6.

Whenever the UE 4 is within the cell area of the network node 2 it will perform a random access procedure 804 and attach to the mobile network as usual. During this access procedure the UE 4 will receive extended system information comprising local sub-cell broadcasts available, i.e. the devices 6 registered as mentioned above. In this way the UEs 4 are made aware that there are device-to-device, D2D, broadcasting services present in the cell as soon as a UE 4 accesses the cell. The devices 6 will broadcast their content regardless if there are any UEs 4 within reach 806 of the devices 6 or not, i.e. the devices 6 transmit according to the transmission scheme negotiated with the network node 2 independently of the presence of UEs 4 in their transmission range. The content delivered by the device 6 may as mentioned above optionally be ciphered to avoid reception by UEs 4 that are not intended to receive it. In such a case the UE 4 is configured to negotiate access 808 with the device 6 and contact them directly once they detect that they are within the transmission range of the device 6. Negotiation of access parameters 808 is however optional.

The UE 4 knows it is within the reach by polling the distribution channels published, i.e. communicated in the extended system information, by the network node 2. When UE 4 listens to the broadcast channel the UE at the same time may require disclosed access to it by contacting the device 6 and negotiating parameters, for example sending a password from the UE 4 to the device 6. In case there are multiple devices 6 installed and configured in the same cell for distributing the same content, the devices in the same set, i.e. in the same broadcast domain are identified uniquely and their identities are published in a list of devices 6 that deliver that content. The network node 2 is aware that there are several devices 6 that provide the same content/service and as a consequence they may be gathered together in the extended system information.

Once the UE 4 is receiving content from a sub-cell broadcast 810 of a device 6 it will receive broadcasting information for example as long as the UE 4 is within the local broadcasting area of device 6 or reaches another device 6 having the same distribution domain. Note that a handover of UE 4 from a device 6 to another device 6 may be performed depending on signal quality experienced by UE.

Thus, methods performed in the device 6 for distributing content to UEs, in UEs for receiving content from the device and in the network node 2 for assigning transmission resources to the device 6 have now been described in detail together with a corresponding device 6, user equipment 4 and network node 2. These methods allow for distribution of content directly D2D without the involvement of the network node. Embodiments of the present technology allow for broadcasting scenarios that will improve the flexibility in content distribution. With various embodiments it is also possible to speed up the setup of the services for customers that have a frequently changing environment, such as a fair or an airport, hosting from time to time different UEs having different user profiles, which require different data to be distributed from time to time.

Being based on D2D transmission the scheme is cheaper to deploy than the for example pico-cell transmission schemes. The proposed scheme could alleviate the D2D transmission setup in case of broadcasting services, facilitating the adoption of the services in a shorter term and mitigating the complexity of such scenario.

Although the present disclosure has been described above with reference to specific exemplary embodiments, the invention only by the scope of the appended claims. In the pending claims, the term "comprise/comprises" does not exclude the presence of other elements or steps. In addition, singular references do not exclude a plurality. Reference signs in the claims are provided merely as a clarifying example and should not be construed as limiting the scope of the claims in any way.

## Claims

1. A method performed in a user equipment (4) for receiving content from a device (6), said device (6) being configured to send sub-cell broadcasts for distributing the content within a sub-cell, said sub-cell being a subset of a coverage area of a network node (2) to which the user equipment (4) is attached, said method **characterised by**:
receiving (502) system information from the network node (2), said system information comprising information about available devices (6) used for distributing the content within the coverage area of the network node (2) and the type of content that is associated with each device (6) and the transmission resources allocated to each device (6) for distributing the content,
selecting (504) the type of content to receive and at least one device (6) associated therewith,
establishing (505) a direct link between the user equipment (4) and the selected at least one device (6) using the transmission resources allocated to the selected at least one device (6), and
receiving (508) the selected type of content directly from the selected at least one device (6).

2. Method according to claim 1, further comprising sending (506) an access key to the selected device (6) for enabling reception of ciphered content for the selected at least one device (6).

3. Method according to claim 1 or 2, wherein the system information is received as extended System Information Blocks.

4. A user equipment (4) for receiving content from a device (6), said device (6) being configured to send sub-cell broadcasts for distributing the content within a sub-cell, said sub-cell being a subset of the coverage area of a network node (2) to which the user equipment (4) is attached, said user equipment (4) **characterised by**:
a communication interface (22) arranged for wireless communication;
a processor (24); and
a memory (26) storing computer program code which, when run in the processor (24), causes the user equipment (4) to:
receive system information from the network node (2), said system information comprising information about available devices (6) used for distributing the content within the coverage area of the network node (2) and the type of content that is associated to each device (6) and the transmission resources allocated to each device (6) for distributing the content,
select the type of content to receive and at least one device (6) associated therewith,
establish a direct link between the user equipment (4) and the selected at least one device (6) using the transmission resources allocated to the selected at least one device (6), and
receive the selected type of content directly from the selected at least one device (6).

5. The user equipment (4) according to claim 4, wherein the user equipment (4) is further configured to send an access key to the selected device (6) for enabling reception of ciphered content from the selected device (6).

6. The user equipment (4) according to claim 4 or 5, wherein the user equipment (4) is configured to receive system information as extended System Information Blocks.

7. A method performed in a network node (2) for assigning transmission resources to a device (6), said device (6) being configured to transmit sub-cell broadcasts for distributing content to a user equipment (4) within a sub-cell, said sub-cell being a subset of the coverage area of the network node (2) to which the user equipment (4) is attached, said method **characterised by**:
receiving (700) a request to register from the device (6), said request comprising information about the sub-cell broadcast capability of the device (6),
receiving (702) a request for allocation of transmissions resources from the device (6) for the sub-cell broadcasts,
transmitting (704) an acknowledgement message to the device (6) that the requested transmission resources have been allocated, and
transmitting (706) system information to all user equipments (4) within the coverage area of the network node (2), said system information comprising information about available devices (6) used for distributing the content within the coverage area of the network node (2) and the type of content that is associated to each device (6) and the transmission resources allocated to each device (6) for distributing the content.

8. The method according to claim 7, wherein transmitting (704) the acknowledgement message comprises transmitting the frequency resources and/or time slot resources that have been allocated by the network node (2), for use by the device (6), according to a predetermined scheme reserved by the network node (2).

9. A network node (2) for assigning transmission resources to a device (6), said device (6) being configured to send sub-cell broadcasts for distributing content to a user equipment (4) within a sub-cell, said sub-cell being a subset of the coverage area of a network node (2) to which the user equipment (4) is attached, said network node (2) **characterised by**:
a communication interface (42) arranged for wireless communication;
a processor (44); and
a memory (46) storing computer program code which, when run in the processor (44), causes the network node (2) to:
receive a request to register from the device (6), said request comprising information about the sub-cell broadcast capability of the device (6),
receive a request for allocation of transmissions resources from the device (6) for the sub-cell broadcasts,
transmit an acknowledgement message to the device (6) that the requested transmission resources have been allocated, and
transmit system information to all user equipments (4) within the coverage area of the network node (2), said system information comprising information about available devices (6) used for distributing the content within the coverage area of the network node (2) and the type of content that is associated to each device (6) and the transmission resources allocated to each device (6) for distributing the content.

10. The network node (2) according to claim 9, wherein the network node (2) further is caused to transmit the frequency resources and/or time slot resources that have been allocated by the network node (2), for use by the device (6), according to a predetermined scheme reserved by the network node (2).

## Patentansprüche

1. Verfahren, das in einem Teilnehmergerät (4) zum Empfangen von Inhalt von einer Vorrichtung (6) durchgeführt wird, wobei die Vorrichtung (6) dazu konfiguriert ist, Übertragungen für eine untergeordnete Zelle zum Verteilen des Inhalts innerhalb einer untergeordneten Zelle zu senden, wobei die untergeordnete Zelle eine Untergruppe eines Abdeckungsgebiets eines Netzknotens (2) ist, mit dem das Teilnehmergerät (4) verbunden ist, wobei das Verfahren **gekennzeichnet ist durch**:
Empfangen (502) von Systeminformationen von dem Netzknoten (2), wobei die Systeminformationen Informationen zu verfügbaren Vorrichtungen (6), die zum Verteilen des Inhalts im Abdeckungsgebiet des Netzknotens (2) verwendet werden, und der Art von Inhalt, der jeder Vorrichtung (6) zugeordnet ist, und den Übertragungsressourcen umfassen, die jeder Vorrichtung (6) zum Verteilen des Inhalts zugeteilt werden,
Auswählen (504) der Art von zu empfangendem Inhalt und wenigstens einer diesem zugeordneten Vorrichtung (6),
Herstellen (505) einer direkten Übertragungsstrecke zwischen dem Teilnehmergerät (4) und der ausgewählten wenigstens einen Vorrichtung (6) unter Verwendung der Übertragungsressourcen, die der ausgewählten wenigstens einen Vorrichtung (6) zugeteilt wurden, und
Empfangen (508) des ausgewählten Inhalts direkt von der ausgewählten wenigstens einen Vorrichtung (6).

2. Verfahren nach Anspruch 1, ferner umfassend Senden (506) eines Zugangsschlüssels an die ausgewählte Vorrichtung (6), um den Empfang von verschlüsseltem Inhalt für die ausgewählte wenigstens eine Vorrichtung (6) zu ermöglichen.

3. Verfahren nach Anspruch 1 oder 2, wobei die Systeminformationen als erweiterte Systeminformationsblöcke empfangen werden.

4. Teilnehmergerät (4) zum Empfangen von Inhalt von einer Vorrichtung (6), wobei die Vorrichtung (6) dazu konfiguriert ist, Übertragungen für eine untergeordnete Zelle zum Verteilen des Inhalts innerhalb einer untergeordneten Zelle zu senden, wobei die untergeordnete Zelle eine Untergruppe des Abdeckungsgebiets eines Netzknotens (2) ist, mit dem das Teilnehmergerät (4) verbunden ist, wobei das Teilnehmergerät (4) **gekennzeichnet ist durch**:
eine Kommunikationsschnittstelle (22), die für Funkkommunikation vorgesehen ist;
einen Prozessor (24); und
einen Speicher (26), der Computerprogrammcode speichert, der bei Ausführung in dem Prozessor (24) das Teilnehmergerät (4) veranlasst zum:
Empfangen von Systeminformationen von dem Netzknoten (2), wobei die Systeminformationen Informationen zu verfügbaren Vorrichtungen (6), die zum Verteilen des Inhalts im Abdeckungsgebiet des Netzknotens (2) verwendet werden, und der Art von Inhalt, der jeder Vorrichtung (6) zugeordnet ist, und den Übertragungsressourcen umfassen, die jeder Vorrichtung (6) zum Verteilen des Inhalts zugeteilt sind,
Auswählen der Art von zu empfangendem Inhalt und wenigstens einer diesem zugeordneten Vorrichtung (6),
Herstellen einer direkten Übertragungsstrecke zwischen dem Teilnehmergerät (4) und der ausgewählten wenigstens einen Vorrichtung (6) unter Verwendung der Übertragungsressourcen, die der ausgewählten wenigstens einen Vorrichtung (6) zugeteilt wurden, und
Empfangen des ausgewählten Inhalts direkt von der ausgewählten wenigstens einen Vorrichtung (6).

5. Teilnehmergerät (4) nach Anspruch 4, wobei das Teilnehmergerät (4) ferner dazu konfiguriert ist, einen Zugangsschlüssel an die ausgewählte Vorrichtung (6) zu senden, um den Empfang von verschlüsseltem Inhalt von der ausgewählten Vorrichtung (6) zu ermöglichen.

6. Teilnehmergerät (4) nach Anspruch 4 oder 5, wobei das Teilnehmergerät (4) dazu konfiguriert ist, Systeminformationen als erweiterte Systeminformationsblöcke zu empfangen.

7. Verfahren, das in einem Netzknoten (2) zum Zuweisen von Übertragungsressourcen an eine Vorrichtung (6) durchgeführt wird, wobei die Vorrichtung (6) dazu konfiguriert ist, Übertragungen für eine untergeordnete Zelle zum Verteilen von Inhalt an ein Teilnehmergerät (4) in einer untergeordneten Zelle zu übertragen, wobei die untergeordnete Zelle eine Untergruppe des Abdeckungsgebiets des Netzknotens (2) ist, mit dem das Teilnehmergerät (4) verbunden ist, wobei das Verfahren **gekennzeichnet ist durch**:
Empfangen (700) einer Anforderung zur Registrierung von der Vorrichtung (6), wobei die Anforderung Informationen über die Übertragungskapazität der untergeordneten Zelle der Vorrichtung (6) umfasst,
Empfangen (702) einer Anforderung zur Zuteilung von Übertragungsressourcen von der Vorrichtung (6) für die Übertragungen der untergeordneten Zelle,
Übertragen (704) einer Bestätigungsnachricht an die Vorrichtung (6), dass die angeforderten Übertragungsressourcen zugeteilt wurden, und
Übertragen (706) von Systeminformationen an alle Teilnehmergeräte (4) im Abdeckungsgebiet des Netzknotens (2), wobei die Systeminformationen Informationen zu verfügbaren Vorrichtungen (6), die zum Verteilen des Inhalts im Abdeckungsgebiet des Netzknotens (2) verwendet werden, und der Art von Inhalt, der jeder Vorrichtung (6) zugeordnet ist, und den Übertragungsressourcen umfassen, die jeder Vorrichtung (6) zum Verteilen des Inhalts zugeteilt werden.

8. Verfahren nach Anspruch 7, wobei das Übertragen (704) der Bestätigungsnachricht das Übertragen der Frequenzressourcen und/oder Zeitfensterressourcen, die von dem Netzknoten (2) zur Verwendung durch die Vorrichtung (6) gemäß einem von dem Netzknoten (2) reservierten vorgegebenen Schema zugeteilt wurden, umfasst.

9. Netzknoten (2) zum Zuweisen von Übertragungsressourcen an eine Vorrichtung (6), wobei die Vorrichtung (6) dazu konfiguriert ist, Übertragungen für eine untergeordnete Zelle zum Verteilen von Inhalt an ein Teilnehmergerät (4) in einer untergeordneten Zelle zu senden, wobei die untergeordnete Zelle eine Untergruppe des Abdeckungsgebiets eines Netzknotens (2) ist, mit dem das Teilnehmergerät (4) verbunden ist, wobei der Netzknoten (2) **gekennzeichnet ist durch**:
eine Kommunikationsschnittstelle (42), die für Funkkommunikation vorgesehen ist; einen Prozessor (44); und
einen Speicher (46), der Computerprogrammcode speichert, der bei Ausführung in dem Prozessor (44) den Netzknoten (2) veranlasst zum:
Empfangen einer Anforderung zur Registrierung von der Vorrichtung (6), wobei die Anforderung Informationen über die Übertragungskapazität der untergeordneten Zelle der Vorrichtung (6) umfasst,
Empfangen einer Anforderung zur Zuteilung von Übertragungsressourcen von der Vorrichtung (6) für die Übertragungen der untergeordneten Zelle,
Übertragen einer Bestätigungsnachricht an die Vorrichtung (6), dass die angeforderten Übertragungsressourcen zugeteilt wurden, und
Übertragen von Systeminformationen an alle Teilnehmergeräte (4) im Abdeckungsgebiet des Netzknotens (2), wobei die Systeminformationen Informationen zu verfügbaren Vorrichtungen (6), die zum Verteilen des Inhalts im Abdeckungsgebiet des Netzknotens (2) verwendet werden, und der Art von Inhalt, der jeder Vorrichtung (6) zugeordnet ist, und den Übertragungsressourcen umfassen, die jeder Vorrichtung (6) zum Verteilen des Inhalts zugeteilt werden.

10. Netzknoten (2) nach Anspruch 9, wobei der Netzknoten (2) ferner dazu veranlasst wird, Frequenzressourcen und/oder Zeitfensterressourcen, die von dem Netzknoten (2) zur Verwendung durch die Vorrichtung (6) gemäß einem von dem Netzknoten (2) reservierten vorgegebenen Schema zugeteilt wurden, zu übertragen.

## Revendications

1. Procédé réalisé dans un équipement utilisateur (4) pour la réception de contenu d'un dispositif (6), ledit dispositif (6) étant configuré pour envoyer des diffusions de sous-cellule pour la distribution du contenu à l'intérieur d'une sous-cellule, ladite sous-cellule étant un sous-ensemble d'une zone de couverture d'un noeud de réseau (2) auquel l'équipement utilisateur (4) est rattaché, ledit procédé étant **caractérisé par** :
la réception (502) d'informations système du noeud de réseau (2), lesdites informations système comprenant des informations sur les dispositifs disponibles (6) utilisés pour la distribution du contenu à l'intérieur de la zone de couverture du noeud de réseau (2) et le type de contenu qui est associé à chaque dispositif (6) et les ressources de transmission attribuées à chaque dispositif (6) pour la distribution du contenu,
la sélection (504) du type de contenu à recevoir et au moins un dispositif (6) associé à celui-ci,
l'établissement (505) d'un lien direct entre l'équipement utilisateur (4) et l'au moins un dispositif sélectionné (6) en utilisant les ressources de transmission attribuées à l'au moins un dispositif sélectionné (6), et
la réception (508) du type de contenu sélectionné directement de l'au moins un dispositif sélectionné (6).

2. Procédé selon la revendication 1, comprenant en outre l'envoi (506) d'une clé d'accès au dispositif sélectionné (6) pour activer la réception de contenu chiffré pour l'au moins un dispositif sélectionné (6).

3. Procédé selon la revendication 1 ou 2, dans lequel les informations système sont reçues en tant que blocs d'informations système étendus.

4. Équipement utilisateur (4) pour la réception de contenu d'un dispositif (6), ledit dispositif (6) étant configuré pour envoyer des diffusions de sous-cellule pour la distribution du contenu à l'intérieur d'une sous-cellule, ladite sous-cellule étant un sous-ensemble de la zone de couverture d'un noeud de réseau (2) auquel l'équipement utilisateur (4) est rattaché, ledit équipement utilisateur (4) étant **caractérisé par** :
une interface de communication (22) agencée pour la communication sans fil ;
un processeur (24) ; et
une mémoire (26) stockant un code de programme informatique qui, lorsqu'il est exécuté dans le processeur (24), amène l'équipement utilisateur (4) à :
recevoir des informations système du noeud de réseau (2), lesdites informations système comprenant des informations sur les dispositifs disponibles (6) utilisés pour la distribution du contenu à l'intérieur de la zone de couverture du noeud de réseau (2) et le type de contenu qui est associé à chaque dispositif (6) et les ressources de transmission attribuées à chaque dispositif (6) pour la distribution du contenu,
sélectionner le type de contenu à recevoir et au moins un dispositif (6) associé à celui-ci,
établir un lien direct entre l'équipement utilisateur (4) et l'au moins un dispositif sélectionné (6) en utilisant les ressources de transmission attribuées à l'au moins un dispositif sélectionné (6), et
recevoir le type de contenu sélectionné directement de l'au moins un dispositif sélectionné (6).

5. Équipement utilisateur (4) selon la revendication 4, dans lequel l'équipement utilisateur (4) est configuré en outre pour envoyer une clé d'accès au dispositif sélectionné (6) pour activer la réception de contenu chiffré de l'au moins un dispositif sélectionné (6).

6. Équipement utilisateur (4) selon la revendication 4 ou 5, dans lequel l'équipement utilisateur (4) est configuré pour recevoir des informations système en tant que blocs d'informations système étendus.

7. Procédé réalisé dans un noeud de réseau (2) pour l'affectation de ressources de transmission à un dispositif (6), ledit dispositif (6) étant configuré pour transmettre des diffusions de sous-cellule pour la distribution de contenu à un équipement utilisateur (4) à l'intérieur d'une sous-cellule, ladite sous-cellule étant un sous-ensemble de la zone de couverture du noeud de réseau (2) auquel l'équipement utilisateur (4) est rattaché, ledit procédé étant **caractérisé par** :
la réception (700) d'une demande d'enregistrement du dispositif (6), ladite demande comprenant des informations sur la capacité de diffusion de sous-cellule du dispositif (6),
la réception (702) d'une demande d'attribution de ressources de transmissions du dispositif (6) pour les diffusions de sous-cellule,
la transmission (704) d'un message d'accusé de réception au dispositif (6) que les ressources de transmission demandées ont été attribuées, et
la transmission (706) d'informations système à tous les équipements utilisateurs (4) à l'intérieur de la zone de couverture du noeud de réseau (2), lesdites informations système comprenant des informations sur les dispositifs disponibles (6) utilisés pour la distribution du contenu à l'intérieur de la zone de couverture du noeud de réseau (2) et le type de contenu qui est associé à chaque dispositif (6) et les ressources de transmission attribuées à chaque dispositif (6) pour la distribution du contenu.

8. Procédé selon la revendication 7, dans lequel la transmission (704) du message d'accusé de réception comprend la transmission des ressources de fréquence et/ou des ressources de créneau horaire qui ont été attribuées par le noeud de réseau (2), pour utilisation par le dispositif (6), selon un schéma prédéterminé réservé par le noeud de réseau (2).

9. Noeud de réseau (2) pour l'attribution de ressources de transmission à un dispositif (6), ledit dispositif (6) étant configuré pour envoyer des diffusions de sous-cellule pour la distribution de contenu à un équipement utilisateur (4) à l'intérieur d'une sous-cellule, ladite sous-cellule étant un sous-ensemble de la zone de couverture d'un noeud de réseau (2) auquel l'équipement utilisateur (4) est rattaché, ledit noeud de réseau (2) étant **caractérisé par** :
une interface de communication (42) agencée pour la communication sans fil ;
un processeur (44) ; et
une mémoire (46) stockant un code de programme informatique qui, lorsqu'il est exécuté dans le processeur (44), amène le noeud de réseau (2) à :
recevoir une demande d'enregistrement du dispositif (6), ladite demande comprenant des informations sur la capacité de diffusion de sous-cellule du dispositif (6),
recevoir une demande d'attribution de ressources de transmissions du dispositif (6) pour les diffusions de sous-cellule,
transmettre un message d'accusé de réception au dispositif (6) que les ressources de transmission demandées ont été attribuées, et
transmettre des informations système à tous les équipements utilisateurs (4) à l'intérieur de la zone de couverture du noeud de réseau (2), lesdites informations système comprenant des informations sur les dispositifs disponibles (6) utilisés pour la distribution du contenu à l'intérieur de la zone de couverture du noeud de réseau (2) et le type de contenu qui est associé à chaque dispositif (6) et les ressources de transmission attribuées à chaque dispositif (6) pour la distribution du contenu.

10. Noeud de réseau (2) selon la revendication 9, dans lequel le noeud de réseau (2) est amené en outre à transmettre les ressources de fréquence et/ou les ressources de créneau horaire qui ont été attribuées par le noeud de réseau (2), pour utilisation par le dispositif (6), selon un schéma prédéterminé réservé par le noeud de réseau (2).
